# EUROPEAN PATENT SPECIFICATION

(11) **EP 0 508 471 B1**
(45) Date of publication and mention of the grant of the patent: **16.07.1997**
(21) Application number: 92106279.0
(22) Date of filing: 10.04.1992
(51) Int. Cl.: G11B 5/60, G11B 5/105, G11B 5/455

(54) **Flying-type magnetic heads**
Fliegende Magnetköpfe
Têtes magnétiques volantes

(30) Priority: 10.04.1991 JP 104755/91
(43) Date of publication of application: 14.10.1992
(73) Proprietor: HITACHI METALS, LTD., Chiyoda-ku, Tokyo 100 (JP)
(72) Inventor: Goto, Ryo, Mooka-shi, Tochigi (JP); Mitsumata, Chiharu, Tano-gun, Gunma (JP)
(74) Representative: Strehl Schübel-Hopf Groening & Partner

(56) References cited:
- EP-A- 0 377 462
- EP-A- 0 425 916
- US-A- 3 732 552
- IBM TECHNICAL DISCLOSURE BULLETIN. vol. 30, no. 8, January 1988, ARMONK NEW YORK US page 472; 'FLEXIBLE MAGNETIC HEAD SLIDER'
- PATENT ABSTRACTS OF JAPAN vol. 13, no. 478 (P-951) 30 October 1989 & JP-A-1 189 020
- PATENT ABSTRACTS OF JAPAN vol. 11, no. 009 (P-534) 10 January 1987 & JP-A-61 184 712
- IBM TECHNICAL DISCLOSURE BULLETIN. vol. 33, no. 9, February 1991, ARMONK NEW YORK US pages 172 - 173; 'CAPACITIVE MEASUREMENTS OF FERRITE HEAD AIR BEARING SURFACE'
- IBM TECHNICAL DISCLOSURE BULLETIN. vol. 12, no. 8, January 1970, ARMONK NEW YORK US page 1232; W. NYSTROM & E.P. VALSTYN: 'CONTROL OF SLIDER AERODYNAMICS IN DISK FILES'

## Description

### BACKGROUND OF THE INVENTION

### 1. Field of the Invention

The present invention relates to a method for manufacturing a flying-type magnetic head assembly, wherein a slider is fixed and adhered to a support.

### 2. Prior Art

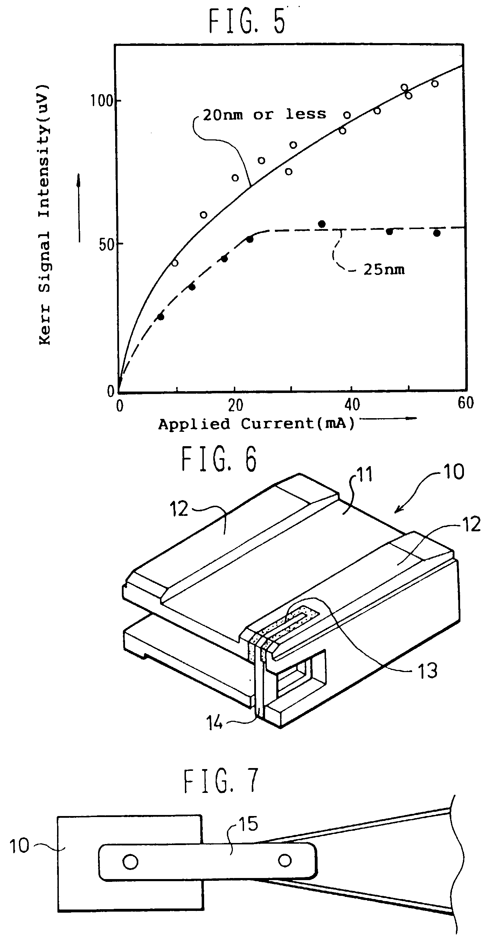

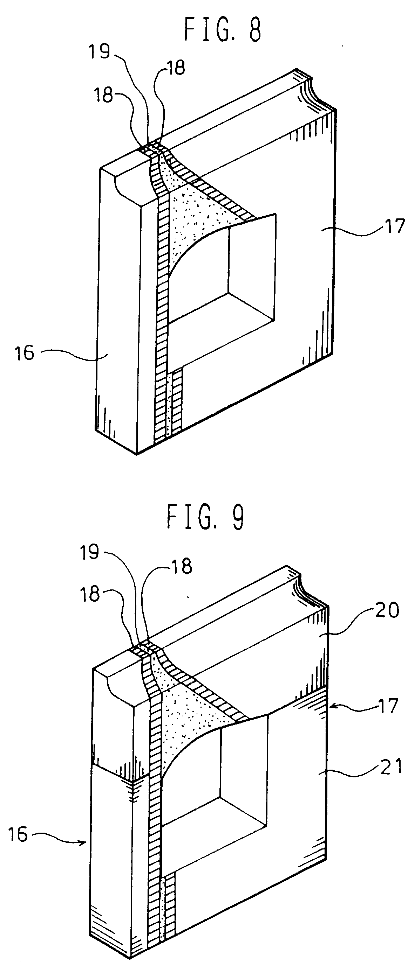

Referring to FIG. 6, a composite flying-type magnetic head 10 comprises a slider 11 having a slit 13 at the outlet of the plane 12 of an air bearing. A magnetic head chip 14 which is illustrated in FIG. 8 is inserted in the slit 12. The magnetic head chip 14 comprises a pair of cores 16 and 17 made from single crystal Mn-Zn ferrite, having incorporated therebetween a metallic magnetic thin film 18 and a glass-filled gap 19. Information is read or recorded by the magnetic change which generate in the gap. An Fe-Al-Si based magnetic thin film is deposited on the magnetic head chip as the metallic magnetic thin film 18. It is also well known that at least a partial use of a single crystal Mn-Zn ferrite in the magnetic circuit improves the playback efficiency of the magnetic head chip.

For reading information to a magnetic recording medium and for recording information to the same using a magnetic head, the gap of the magnetic head must be faced against the magnetic recording medium in such a manner that a very short distance is maintained therebetween. Accordingly, as shown in FIG. 7, the magnetic head 10 is fixed and adhered by the back of the slider to an elastic support 15 which is called gimbals.

Since recordings are more frequently made in the high frequency regions with increasing demand for a higher density recording these days, there are newly occurring problems such as causing resonance with the recording and playback frequencies even in an inductance level. Such a resonance brings forth increase of noise and lowering of the magnetic head characteristics.

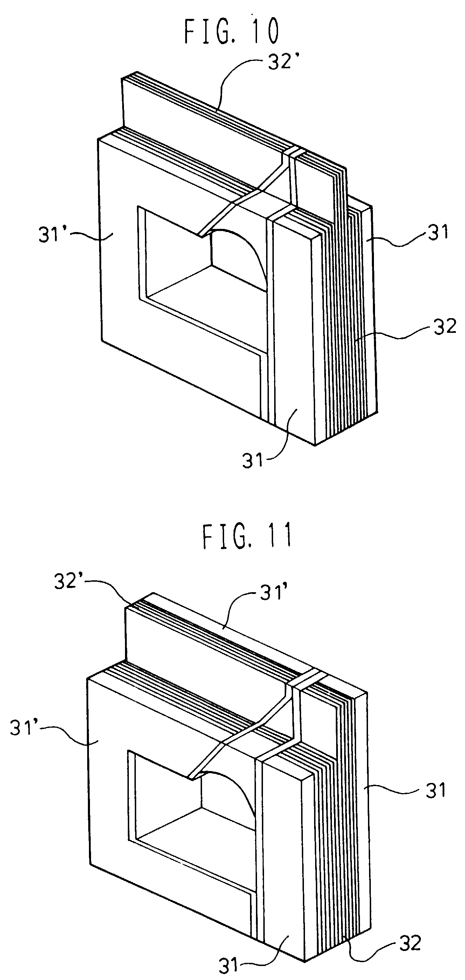

To cope with the aforementioned problems, another type of flying-type composite magnetic head is also studied. As shown in FIGS. 10 and 11, a magnetic head of this type comprises a core made of a non-magnetic substrate material such as of MnO and NiO, and a magnetic head chip held in the slit provided to the slider. Said magnetic head chip has a magnetic circuit in the layered film of a metallic magnetic thin film and a non-magnetic film. The magnetic head chip as illustrated in FIGS. 10 and 11 comprises cores 31 and 31' made of a non-magnetic substrate such as of ceramics. On the sides of the non-magnetic substrates magnetic metallic thin films 32 and 32', or layered films composed of metallic magnetic thin films and non-magnetic films are deposited. The metallic magnetic thin films 32 and 32' or layered films are sandwiched between non-magnetic substrate materials. Because such magnetic heads must be suitably used for narrower tracks which require higher precision, the metallic magnetic thin films and the layered films are subjected to drawing for tracks which are buried in the slit of the air bearing and fixed using a molding glass. The magnetic head chip shown in FIG. 10 is track-drawn at the center portion near to the gap, whereas the magnetic head chip shown in FIG. 11 comprises cores 31 and 31', one of which is drawn for tracks.

### SUMMARY OF THE INVENTION

The flying-type magnetic heads described hereinbefore are operated with the slider plane being levitated from the surface of a magnetic recording medium at a height of about 0.1 µm. Accordingly, the back of the magnetic head slider is fixed and adhered to an elastic support to maintain the magnetic head levitated from the surface of a magnetic recording medium. However, sometimes degradation of the write characteristics occurred in accordance with the bonding conditions of the slider to the elastic support to effect a tight adhesion therebetween.

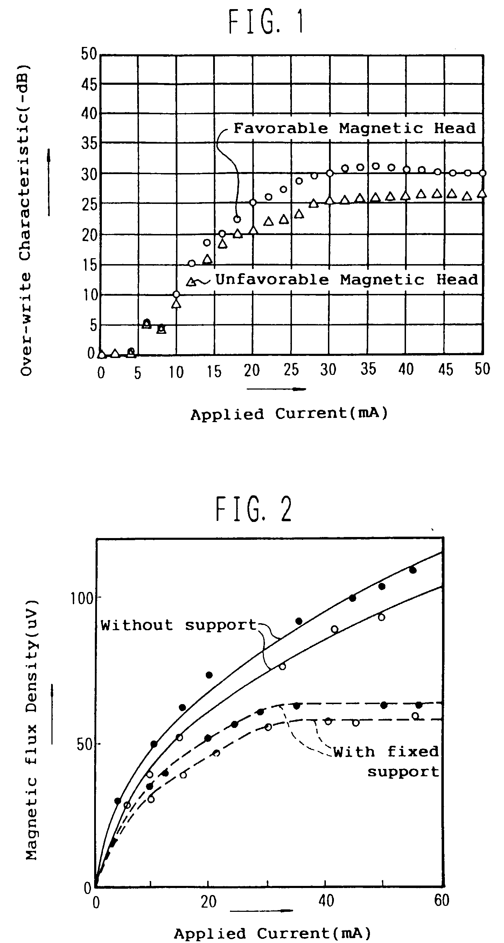

More specifically, even when the same magnetic head chips were to be used to fabricate magnetic heads, the write characteristics of the magnetic heads which result after fixing the chips to elastic supports are quite different; some come out with satisfactory write characteristics and the others show unfavorable characteristics. This can be seen by over-writing a magnetic recording media using the magnetic heads, and by comparing the over-write characteristics (the ratio of the residual signal of the previous recording to the newly recorded signal on a magnetic recording medium) thereof, as is shown in FIG. 1.

Then, Kerr signal intensities with changing applied current was measured on the metallic magnetic thin film of a magnetic head which exhibited a poor playback efficiency upon fixing it on an elastic support. The measurement was made on the metallic thin films in both states with the slider being fixed and unfixed to the elastic support, using a scanning Kerr effect measurement apparatus (referred to hereinafter as SKEM). The results are given in FIG. 2. It can be seen that even when the sliders comprises the metallic magnetic thin films with favorable characteristics, the write characteristics become impaired once they are fixed on elastic supports. This is a clear evidence which shows that fixing a metallic magnetic thin film to an elastic support impairs the write characteristics thereof.

The object of the invention is to provide a method for manufacturing a flying-type magnetic head assembly avoiding a deterioration in the over-write characteristics by the manufacturing process.

This object is met by a method according to claim 1. A preferred embodiment is disclosed in the subclaim.

The present inventors have studied extensively the reason why some magnetic heads show poor write characteristics when they are fixed to elastic supports while the others do not. As a result, it has been found that the conditions upon fixing the magnetic head to an elastic support greatly change the height of the plane of the slider of the magnetic head and hence the write characteristics, and that the over-write characteristics become impaired with increasing change of the height of the plane of the flying slider.

The present inventors measured the height of the plane of the slider on the magnetic heads having fixed on elastic supports, for both of those having favorable characteristics and those having poor characteristics. It has been found as a result that the difference in the height of plane of the slider was as small as 20 nm or less for those having favorable write characteristics, whereas those poor in the characteristics exhibited a large difference of from 25 to 70 nm. Thus, it has been assumed that the stress to the magnetic head chip becomes larger with increasing difference between the heights of the plane of the slider with and without the elastic support being adhered thereto, and hence, that there occurs a reversed magnetostrictive phenomenon in which the magnetized state achieves a different state from that of the initial. Conclusively, it has been thought that the generation of a reversed magnetostriction deteriorates the characteristics of the metallic magnetic thin film to lower the magnetic flux density, and that the over-write characteristics are thereby impaired.

The present invention provides a magnetic head, the slider of which is adhered by its back to an elastic support, with the height of the plane of the slider being controlled as such that it may be different by 20 nm or less from the height with the slider not being adhered by its back to an elastic support. The difference in height of the plane of the slider must be controlled to 20 nm or less; otherwise a favorable over-write characteristics would not be stably achieved.

The accumulation of a large stress to the magnetic head chip is avoided by thus controlling the height of the plane of the slider of a magnetic head being fixed to an elastic support to be different by 20 nm or less with respect to the head having no elastic supports being adhered thereto. The metallic magnetic thin film can then maintained in a magnetized state similar to that without any elastic supports being fixed thereto, and hence keep the over-write characteristics free from being impaired.

In the flying type magnetic head mentioned above, the magnetic head chip to be established on a slider comprises a core on which the metallic magnetic thin film is to be deposited, and this core may be made either wholly or partially of a single crystal Mn-Zn ferrite. The magnetic head chip may be such comprising a non-magnetic core having deposited thereon a metallic magnetic thin film, or such comprising a non-magnetic core having deposited thereon a layered film composed of a metallic magnetic thin film and a non-magnetic film.

### BRIEF DESCRIPTION OF THE DRAWINGS

FIG. 1 is a graph showing the over-write characteristic curve of magnetic heads;
FIG. 2 is a graph showing the Kerr signal intensity curve of metallic magnetic thin films of magnetic heads;
FIG. 3(a) is a schematic drawing of the flying plane of a flying type magnetic head for explanatory means;
FIG. 3(b) is an explanatory drawing to show the difference in height of the plane of a flying slider;
FIG. 4 is a perspective view of a flying type magnetic head being fixed on an elastic support;
FIG. 5 is a graph showing the Kerr signal intensity curve of metallic magnetic thin films of flying type magnetic heads;
FIG. 6 is a perspective view of a conventional magnetic head;
FIG. 7 is a partial view of the portion of a conventional magnetic head, by which portion the head is being fixed on an elastic support;
FIG. 8 is a perspective view of a magnetic head chip the core of which is made wholly of a single crystal Mn-Zn ferrite;
FIG. 9 is a perspective view of a magnetic head chip the core of which is made partially of a single crystal Mn-Zn ferrite;
FIG. 10 is a perspective view of a magnetic head chip comprising non-magnetic cores, having incorporated therebetween a layered film composed of a metallic magnetic thin film and a non-magnetic film; and
FIG. 11 is a perspective view of a magnetic head chip differing in construction from that shown in FIG. 10.

### DETAILED DESCRIPTION OF THE PREFERRED EMBODIMENTS

Now the present invention is explained in further detail referring to non-limiting examples below.

### EXAMPLE 1

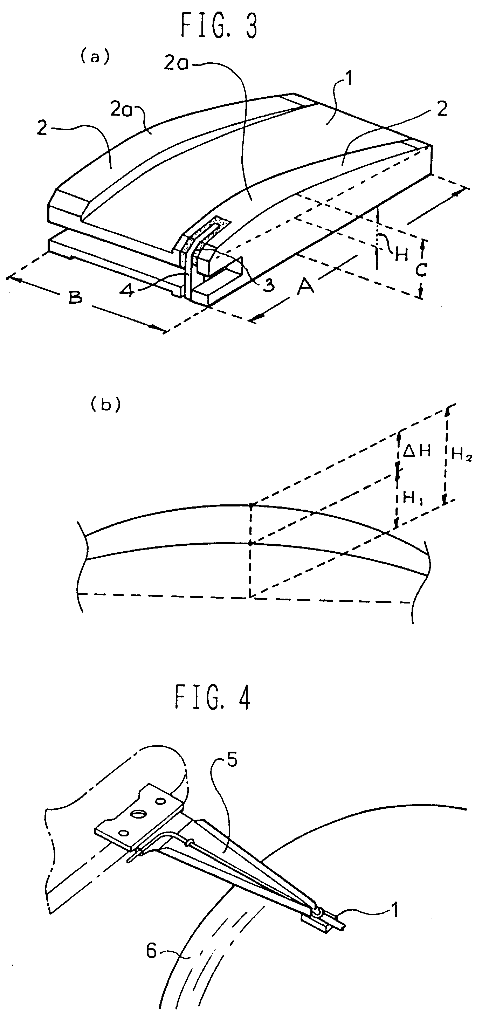

Referring to FIGS. 3 and 4, the flying type magnetic head according to the present invention is explained. Cores 16 and 17 used here was made wholly from a single crystal Mn-Zn ferrite as shown in FIG. 8. A magnetic chip 4 comprising a metallic magnetic thin film being incorporated at the vicinity of the magnetic gap between the cores was inserted and fixed in a slit 3 having provided on a non-magnetic slider 1 at the discharge side of an air bearing through which a magnetic recording medium is discharged. The back of the slider 1 was fixed to an elastic support 5 with an adhesive in such a manner that the flying plane of the slider 1 may face the magnetic recording medium 6. The slider 1 becomes levitated from the magnetic recording medium 6 for a minute distance with the rotation of the magnetic recording medium 6, so that the magnetic information which generate at the gap portion of the magnetic head chip may be recorded to the magnetic recording medium 6, or reversely read the information of the magnetic recording medium 6 at the gap portion.

The flying plane 2 of the slider 1 comprises a projecting portion 2a as shown in FIG. 3(a), and the height H of said projecting portion 2a is controlled as such that the difference thereof between the states of fixing and without fixing an elastic support may fall within 20 nm. More specifically, as shown in Fig. 3(b) ,the height, H₁, of the projecting portion without fixing the slider 1 to an elastic support changes to H₂ upon fixing the slider to an elastic support, yielding a difference in height of ΔH. To control the height H of the projecting portion to 20 nm or less,the back of the slider 1 was adhered to the elastic support 5 with care not to cause deformation on the flying plane of the slider. The height H of the plane of the slider 1 was measured before adhering the back of the slider 1 to the elastic support 5, and the height H of the plane of the slider was measured again after adhesion, to select only those heads having a difference in height of 20 nm or less before and after the adhesion.

In the above embodiment, the slider 1 has a length A measured in the direction of relative movement between the slider 1 and the recording medium 6 of 2 to 4 mm, preferably 3.0 mm. The width B measured transverse to the moving direction is between 2.0 and 2.5 mm, preferably 2.2 mm. The maximum height C measured between the surface on which the slider 1 is connected to the support 5, i.e. the lower surface in FIG. 3, and the highest point of the curved surface of the projecting portion 2a, which faces the recording medium 6, is between 0.5 and 0.8 mm, preferably 0.65 mm.

As further shown in FIG. 1, the two lateral portions 2a have convexly curved surfaces and they project above the central portion of the slider surface, which is also convexly curved.

The slot 3, into which the magnetic head chip 4 is inserted, is formed in one of the two projecting portions 2a at the trailing edge of the slider 1, as related to the relative movement between the slider 1 and the magnetic recording medium 6, which may be a magnetic disk.

In the foregoing manner, magnetic heads having a change in height of the projecting portion 2a of 20 nm or less were obtained with an elastic support being adhered thereto. The Kerr signal intensity (uV) was measured using an SKEM on each of the magnetic heads thus obtained at respective applied current. The results are given in FIG. 5. In FIG. 5 are also shown the Kerr signal intensity for unfavorable magnetic heads which yielded a difference in the height at the projecting portion 2a of the flying plane of 25 nm. It can be confirmed from FIG. 5 that the magnetic heads having a height difference of the projecting portion 2a of 20 nm or less yield favorably a signal intensity increasing in proportion to the applied current, whereas those having a height difference of the projecting portion 2a of 25 nm became saturated at an applied current of about 20 mA.

In the foregoing Example, the core which establishes the magnetic circuit of the magnetic head chip 4 was wholly constructed by a single crystal Mn-Zn ferrite. A similar result was obtained, however, with a magnetic chip 4 as shown in FIG. 9, having a core comprising single crystal Mn-Zn ferrite only at the vicinity 20 of the gap of the cores 16 and 17, and the rest 21 being made of a polycrystalline Mn-Zn ferrite.

The same effect as above can be obtained with a magnetic head chip 4 comprising non-magnetic cores 31 and 31' having deposited thereon metallic magnetic thin films 21 and 32', or such comprising cores 31 and 31' having deposited layered films 32 and 32' each composed of a metallic magnetic thin film and a non-magnetic film, as shown in the foregoing FIGS. 10 and 11. Furthermore, a plurality of cores may be used to sandwich a metallic magnetic thin film or a layered film. It is also effective to use a core having a non-magnetic protective film coated thereon in the place of a core of the pair of cores shown in FIGS. 10 and 11.

As described above, the present invention provides a flying type magnetic head having an excellent over-write characteristic, because the magnetic head chip is free from stresses and hence free from being unfavorably influenced in magnetization. This is achieved by controlling the height of the plane of the slider being adhered to an elastic support to be different from that with no elastic support being adhered by 20 nm or less.

### EXAMPLE 2

A flying magnetic head was fabricated in the same manner as in Example 1, except for using a magnetic head chip having deposited thereon a metallic magnetic thin film and having a magnetic circuit which is at least partially constructed by a single crystal Mn-Zn ferrite. The magnetic head was inserted and fixed in a slit having provided on a non-magnetic slider at the discharge side of an air bearing through which a magnetic recording medium is discharged. The back of the slider was fixed to an elastic support in such a manner that the flying plane of the slider may face the magnetic recording medium. The magnetic heads thus obtained were evaluated as follows. The height of the plane of the slider was measured before adhering the back of the slider to the elastic support, and the height of the plane of the slider was measured again after adhesion, to select only those heads having a difference in height of 20 nm or less before and after the adhesion as favorable heads. As a result, it was found that the heads evaluated as favorable ones exhibited excellent over-write characteristics, whereas those evaluated as being unfavorable yielded poor over-write characteristics.

As will be understood from the above, the slider 1 is prone to deformation when it is fixed to the support arm 5. This deformation produces mechanical stress on the magnetic head chip 4 inserted in the slider 1, which in turn causes the reverse magnetostriction effect referred to above.

It was found that this reverse magnetostriction can be tolerated only to a certain limit, so that slider/support assemblies in which the slider has become excessively deformed due to its fixation to the support, will not operate satisfactorily.

In order to determine the amount of deformation, thus the amount of stress, and ultimately the amount of reverse magnetostriction caused by the fixing of the slider 1 to the support 5, bending or the increase in curvature of the outer surface of the rigid projecting portion 2a is determined. Referring to FIG. 3, this curvature is determined by measuring the height H between the upper surface of the projecting portion 2a and a line connecting the points where the convex upper surface meets the vertical end faces of the slider 1. The value H is thus a measure of the curvature of the upper surface of the projecting portion 2a which increases when the slider 1 and thus the projecting portions 2a become bent due to deformation.

The value ΔH = 20 nm referred to above was found to be a critical value representative of the deformation caused by the fixation of the slider 1 to the support arm 5, up to which critical value the deteriorating effects on the output signal of the magnetic head could be tolerated. Although this critical value was measured with a slider/magnetic head assembly shown in FIG. 3 and the dimension set forth above, it turned out that the value of 20 nm is for all practical cases unrelated to the dimensions of the slider 1 and the magnetic head chip 4.

## Claims

1. A method for manufacturing a flying-type magnetic head assembly comprising
a support (5;15)
a non-magnetic slider (1;11) having a front face (2,2a) adapted to face a recording medium (6) and shaped so as to form an air bearing with said medium due to relative movement between the slider and the recording medium, a back face for fixing said slider to said support, and first and second end faces delimiting the slider in the direction of the air flow, said front face including lateral projecting portions (2a) projecting in a direction substantially perpendicular to said front face and having an upper surface extending from said first end face to said second end face, and
a magnetic head chip (4;14) inserted in a slit (3;13) formed in one of said projecting portions (2a) at the trailing end of said slider,
characterised in that the method comprises the following steps executed in the following orders
(a) measuring the maximum distance between said surface of the projecting portion (2a) holding the magnetic head chip and a plane connecting the points where said surface meets the first and the second end faces, to obtain a first value (H1);
(b) adhering the slider to the support;
(c) measuring said maximum distance again to obtain a second value (H2);
(d) calculating the difference (ΔH) between the second value and the first value; and
(e) keeping the head assembly only if said difference is 20 nm or less.

2. The method according to claim 1, wherein said surface of the projecting portion (2a) is convexly curved, and the distances (H1,H2) are measured at the apex of said surface.

## Patentansprüche

1. Verfahren zum Herstellen eines Magnetkopf-Aufbaus mit
einem Träger (5; 15),
einem nicht-magnetischen Gleiter (1; 11) mit einer Vorderseite (2, 2a), die angepaßt ist, einem Aufnahmemedium (6) gegenüber zu liegen, und so geformt ist, daß sie eine Luftlagerung mit dem Medium aufgrund der relativen Bewegung zwischen dem Gleiter und dem Aufnahmemedium bildet, einer Rückseite zum Befestigen des Gleiters an dem Träger, und ersten und zweiten Endflächen, die den Gleiter in Richtung der Luftströmung begrenzen, wobei die Vorderseite lateral vorspringende Abschnitte (2a) enthält, die in eine Richtung im wesentlichen senkrecht zur Vorderseite vorstehen und eine obere Fläche aufweisen, die sich zwischen der ersten und der zweiten Endflächen erstreckt,
einem Magnetkopf-Chip (4; 14), der in einem Schlitz (3; 13) eingeführt ist, der in einem der vorspringenden Abschnitte (2a) am Spurende des Gleiters ausgebildet ist,
**dadurch gekennzeichnet**, daß
das Verfahren die folgenden Schritte, die in der nachfolgenden Reihenfolge ausgeführt werden, aufweist:
(a) Messen des maximalen Abstands zwischen der Oberfläche des vorspringenden Abschnitts (2a), der den Magnetkopf-Chip festhält, und einer Ebene, die die Punkte, an denen die Oberfläche die ersten und zweiten Endflächen trifft, verbindet, um einen ersten Wert (H1) zu erhalten;
(b) Kleben des Gleiters an den Träger;
(c) nochmaliges Messen des maximalen Abstands, um einen zweiten Wert (H2) zu erhalten;
(d) Berechnen der Differenz (ΔH) zwischen dem ersten Wert und dem zweiten Wert; und
(e) Aufbewahren des Magnetkopf-Aufbaus nur, wenn die Differenz kleiner oder gleich 20 nm ist.

2. Verfahren gemäß Anspruch 1, wobei die Oberfläche des vorspringenden Abschnitts (2a) konvex gekrümmt ist und die Abstände (H1, H2) am Scheitelpunkt der Oberfläche gemessen werden.

## Revendications

1. Procédé de fabrication d'un assemblage de tête magnétique du type volant comprenant
un support (5 ; 15),
un patin non magnétique (1 ; 11) ayant une face avant (2, 2a) adaptée pour être en regard d'un support d'enregistrement (6) et profilé de façon à former un coussin d'air avec ledit support par le mouvement relatif entre le patin et le support d'enregistrement, une face arrière pour fixer ledit patin audit support, et des première et deuxième faces d'extrémité délimitant le patin dans la direction du flux d'air, ladite face avant comprenant des parties en saillie latérales (2a) faisant saillie dans une direction substantiellement perpendiculaire à ladite face avant et ayant une surface supérieure s'étendant depuis ladite première face d'extrémité jusqu'à ladite deuxième face d'extrémité, et
un élément de tête magnétique (4 ; 14) inséré dans une fente (3 ; 13) formée dans l'une desdites parties en saillie (2a) à l'extrémité arrière dudit patin,
caractérisé en ce que le procédé comprend les étapes suivantes exécutées dans l'ordre suivant :
(a) mesurer la distance maximale entre ladite surface de la partie faisant saillie (2a) maintenant l'élément de tête magnétique et un plan reliant les points où ladite surface rencontre les première et deuxième faces d'extrémité, pour obtenir une première valeur (H1) ;
(b) faire adhérer le patin au support ;
(c) mesurer à nouveau ladite distance maximale pour obtenir une deuxième valeur (H2) ;
(d) calculer la différence (ΔH) entre la deuxième valeur et la première valeur ; et
(e) garder l'assemblage de tête seulement si ladite différence est de 20 nm ou moins.

2. Procédé selon la revendication 1, dans lequel ladite surface de la partie faisant saillie (2a) est incurvée de manière convexe, et les distances (H1, H2) sont mesurées à l'apex de ladite surface.
